# EUROPEAN PATENT SPECIFICATION

(11) **EP 0 692 407 B1**
(45) Date of publication and mention of the grant of the patent: **29.04.1998**
(21) Application number: 95110455.3
(22) Date of filing: 05.07.1995
(51) Int. Cl.: B60R 1/08

(54) **Rear view mirror and method for manufacturing the same**
Rückspiegel und Methode zu seiner Herstellung
Rétroviseur et son procédé de fabrication

(30) Priority: 13.07.1994 JP 183867/94
(43) Date of publication of application: 17.01.1996
(73) Proprietor: MURAKAMI KAIMEIDO CO., LTD, Shizuoka 422 (JP)
(72) Inventor: Kanazawa, Toru, Shida-gun, Shizuoka, 421-02 (JP)
(74) Representative: Dallmeyer, Georg, Dipl.-Ing.

(56) References cited:
- CH-A- 538 371
- DE-A- 2 527 362
- US-A- 3 170 985

## Description

This invention relates to a rear view mirror capable of having an enlarged visual field by disposing mirror surface areas of different curvatures side by side or disposing mirror surface areas side by side so as to constitute discontinuous planes and, more particularly, to a back mirror of this type in which a border portion of the mirror surface areas can be recognized easily at night. The invention relates also to a method for manufacturing such glass.

A rear view mirror of a vehicle which is generally made in a convex mirror surface of a constant radius of curvature or in a flat mirror surface has the disadvantage that its visual field is so narrow that it has the dead angle. The visual field can be broadened by reducing the radius of curvature of the mirror surface but this reduces the image magnification and, as a result, it becomes difficult to accurately recognize the distance of the image.

As a rear view mirror which has a broader visual field and facilitates recognition of distance of the image, there has been proposed a rear view mirror which has mirror surface areas of different curvatures disposed side by side or has mirror surface areas disposed side by side so as to constitute discontinuous planes.

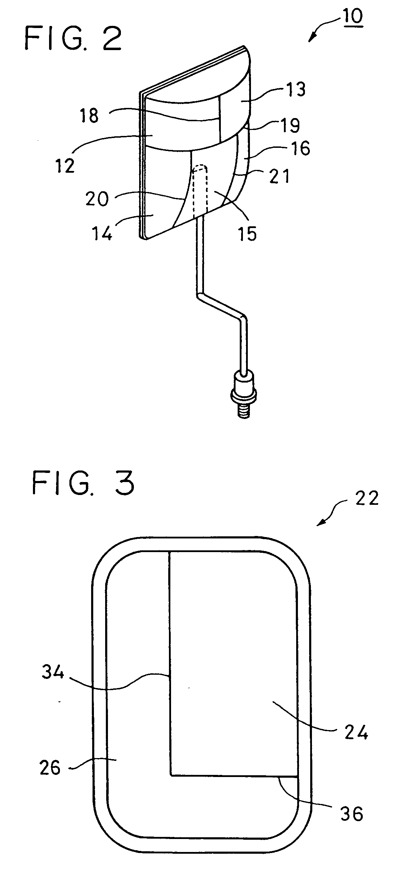

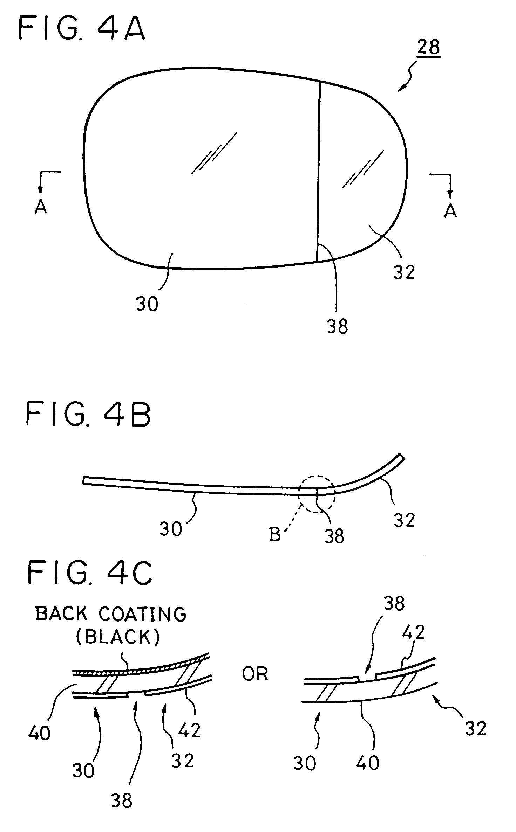

For example, a rear view mirror disclosed in Japanese Utility Model Publication No. Sho 40-6148 is shown in Fig. 2. The mirror surface of this rear view mirror 10 is composed of plural mirror surface areas 12 having different curvatures and disposed side by side. For another example, a rear view mirror disclosed in Japanese Utility Model Publication No. Sho 62-118750 is shown in Fig. 3. The mirror surface of this rear view mirror 22 is composed of plural mirror surface areas 24 and 26 having different radiuses of curvature from each other and disposed side by side. Figs. 4A to 4C show an example of a rear view mirror which has been manufactured in the past. In this back mirror 28, the radius of curvature is gradually changed. The mirror surface of this rear view mirror 28 has a mirror surface area 30 (a spherical surface) having a constant radius of curvature and a mirror surface area 32 (a non-spherical surface) having a gradually changing radius of curvature.

In the prior art rear view mirror having plural mirror surface areas, it will be dangerous unless a particular mirror surface area is easily recognized at night as a mirror surface from which an image reflected on the rear view mirror comes. For this reason, it is necessary to form a dividing line, as described in US-A-3,170,985, indicating division of the mirror surface areas along the border of the mirror surface areas. In the example of Fig. 2, for example, dividing lines 18 to 21 are drawn with a noctilucent paint. There is however the problem in this prior art rear view mirror that the dividing lines 18 to 21 become hard to see with lapse of time due to coming off or deterioration of the noctilucent paint. In the example of Fig. 3, dividing lines 34 and 36 are formed by printing. These dividing lines 34 and 36 however are difficult to see at night. In the example of Figs. 4A to 4C, a dividing line 38 is formed, as shown in Fig. 4C, by cutting off a part of a reflecting film 42 formed on the front or back surface of a glass substrate 40 along the border of the mirror surface areas 30 and 32. In this example also, it is difficult to see the dividing line 38 at night. Besides, the width of the dividing line 38 is so small that when a driver focuses his eyes on the rear view to look at the rear view through this rear view mirror 28, the dividing line 38 becomes dim and hard to see. Moreover, in case an aluminum film is used as the reflecting film 42, a portion adjacent to the dividing line 38 is eroded due to high heat generated by cutting off of the portion for the dividing line 38 and back coating cannot prevent such erosion.

It is, therefore, an object of the present invention to provide a rear view mirror according to which a driver can easily recognize a border portion between mirror surface areas at night and a method for manufacturing such rear view mirror.

For achieving the above described object of the invention, there is provided a rear view mirror having plural mirror surface areas of different curvatures disposed side by side or plural mirror surface areas disposed side by side to form discontinuous planes, said mirror comprising a dividing line having a light diffusion effect formed along a border portion of the plural mirror surface areas.

According to the invention, a dividing line having a light diffusion effect is provided along a border portion between the plural mirror surface areas and, accordingly, the dividing line glistens against head light of a vehicle running in the rear or street light at night and thereby becomes easier to see and hence the division of the mirror surface areas can be readily recognized and safety in driving can thereby be ensured.

The dividing line is formed with projections and depressions having a light diffusion effect.

According to the invention, there is no coming off or deterioration of the dividing line as in the case of the noctilucent paint so that the dividing line can be used for a long time.

A further feature of the invention is that the projections and depressions are formed on at least one of a transparent substrate, a reflecting film and a transparent thin film formed on the reflecting film.

According to this feature, the light diffusion effect can be obtained by forming the projections and depressions on one of the above mentioned surfaces.

Another feature of the invention is that the projections and depressions are formed on at least one of a front surface of a transparent substrate, a back surface of the transparent substrate, a border plane between the transparent substrate and a reflecting film, a front surface of the reflecting film, a front surface of a transparent thin film formed on the reflecting film and a border plane between the transparent thin film and the reflecting film.

According to this feature of the invention, the light diffusion effect can be obtained by forming the projections and depressions on one of the above mentioned surfaces. Particularly, by forming the projections and depressions on a portion of the mirror other than the foremost front portion thereof, the dividing line can be kept clean and, therefore, deterioration in the light diffusion effect can be prevented. Moreover, forming of the projections and depressions without cutting off a part of the reflecting film can be readily achieved and erosion of the reflecting film due to cutting off thereof can thereby be prevented.

A further feature of the invention is that the width of the dividing line is within a range between 0.5 mm and 2 mm.

According to this feature, since the dividing line is a relatively thick one having the width of 0.5 mmm or over, the dividing line can be clearly recognized when the driver look at the rear view, even if the dividing line becomes dim. Also, since the width of the dividing line is 2 mm or less, the dividing line does not cause difficulty in the driver's seeing the rear view.

A still further feature of the invention is that there is provided a method for manufacturing a rear view mirror having a dividing line formed with projections and depressions and having a light diffusion effect, said method comprising a step of forming the projections and depressions by blasting.

According to this method, since the projections and depressions are formed by blasting according to which a surface is ground by causing small beads or the like material to collide with the surface, a uniform light diffusion effect can be obtained.

Preferred embodiments of the invention will be described below with reference to the accompanying drawings.

In the accompanying drawings,
Figs. 1A and 1B are views showing an embodiment of the invention in which Fig. 1A is a front view and Fig. 1B is a view taken along lines A-A in Fig. 1A;
Fig. 2 is a perspective view showing a prior art rear view mirror;
Fig. 3 is a front view showing another prior art rear view mirror;
Figs. 4A, 4B and 4C are views showing another prior art rear view mirror in which Fig. 4A is a front view, Fig. 4B is a sectional view and Fig. 4C is a partly enlarged sectional view;
Fig. 5 is a partly enlarged sectional view showing a specific example of the structure of a dividing line 56 in Fig. 1;
Fig. 6 is a partly enlarged sectional view showing another example of the structure of the dividing line 56 in Fig. 1;
Fig. 7 is a partly enlarged sectional view showing another example of the structure of the dividing line 56 in Fig. 1;
Fig. 8 is a partly enlarged sectional view showing another example of the structure of the dividing line 56 in Fig. 1;
Fig. 9 is a partly enlarged sectional view showing another example of the structure of the dividing line 56 in Fig. 1;
Fig. 10 is a partly enlarged sectional view showing another example of the structure of the dividing line 56 in Fig. 1;
Fig. 11 is a partly enlarged sectional view showing another example of the structure of the dividing line 56 in Fig. 1; and
Fig. 12 is a partly enlarged sectional view showing another example of the structure of the dividing line 56 in Fig. 1.

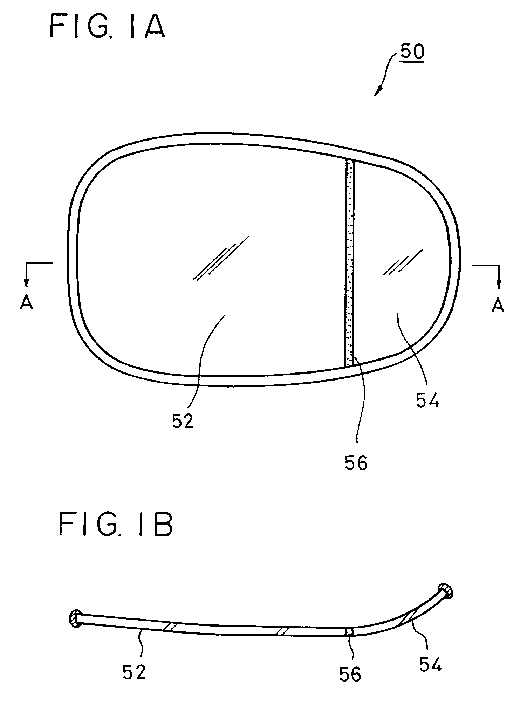

Figs. 1A and 1B show an embodiment of the invention. The figures show only a mirror portion. A rear view mirror 50 is of a mirror in which the radius of curvature changes gradually and is formed as a right side outer mirror (e.g., a door mirror or a fender mirror). The invention of course is applicable to other rear view mirrors. The mirror surface of the rear view mirror 50 consists of a mirror surface area 52 (a spherical surface) having a constant radius of curvature and a mirror surface 54 having a gradually changing radius of curvature (a gradually changing area or a non-spherical area) disposed side by side. A dividing line 56 having a light diffusion effect is formed in a border portion between the mirror surface areas 52 and 54.

According to this rear view mirror 50, a normal rear view can be seen by the mirror surface area 52 and a right side view of the vehicle can be seen by the mirror surface area 54. Since the dividing line 56 has a light diffusion effect, the dividing line 56 glistens against the head light of a vehicle running in the rear or street light at night and, therefore, the two areas 52 and 54 can be distinguished easily from each other.

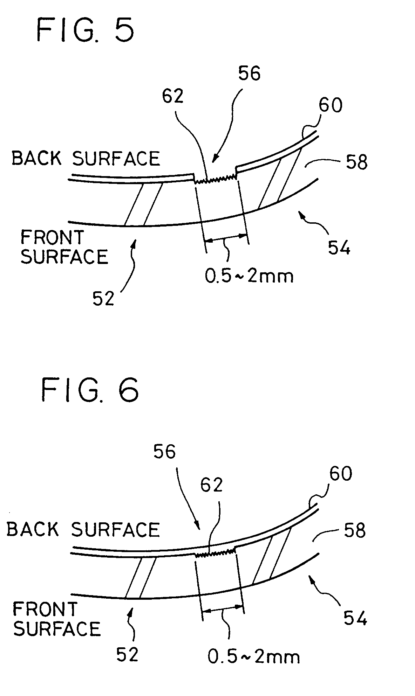

A specific example of the structure of the dividing line 56 is shown in Fig. 5. A mirror surface is formed by forming a reflecting surface 60 made of chromium or aluminum on the rear surface of a glass substrate 58 by sputtering or vapor deposition. After forming the reflecting film 60, the reflecting film 60 is cut off in a portion where the dividing line 56 is to be formed. Alternatively, the reflecting film 60 may be originally formed excluding a portion where the dividing line 58 is to be formed. Then, the exposed portion of the rear surface of the glass substrate 58 is ground uniformly by blasting, e.g., by causing fine beads to collide on the exposed glass substrate portion, whereby fine projections and depressions 62 are formed on the exposed rear surface of the glass substrate 58. Thus, a uniform light diffusion effect over the entire dividing line 62 can be obtained. As the fine beads, beads of aluminum, silicon, iron or glass may be employed. The fine beads should preferably have a diameter within a range between several microns and several hundred microns.

For obtaining an excellent light diffusion effect, the distance between the peak and bottom of the projections and depressions 62 should preferably be within a range between several microns and several hundred microns. By setting the width of the dividing line 56 within a range between 0.5 mm and 2.0 mm, the dividing line 56 can be clearly recognized when the driver sees the rear view and, in this case, the dividing line 56 does not become an obstacle in seeing the rear view. The entire processing including cutting off of the reflecting film 60 and forming of the projections and depressions 62 on the glass substrate 58 may be made continuously by a series of blasting processes. Even if the reflecting film 60 is formed by an aluminum film, erosion which generally occurs in cutting off the film will not occur because the reflecting film 60 is ground by physical collision of beads used in the blasting process without generating a high heat.

Another example of the dividing line 56 is shown in Fig. 6. This is also of a type in which a mirror surface is formed by forming a reflecting film 60 made of chromium or aluminum on the rear surface of a glass substrate 58 by sputtering or vapor deposition. Before forming the reflecting film 60, projections and depressions 62 are formed by blasting on the rear surface of the glass substrate 58 in a portion where the dividing line 56 is to be formed. Then, the reflecting film 60 is formed on the entire rear surface of the glass substrate 58. According to this processing, cutting of the reflecting film 60 is obviated so that occurrence of erosion along the cut off portion can be prevented.

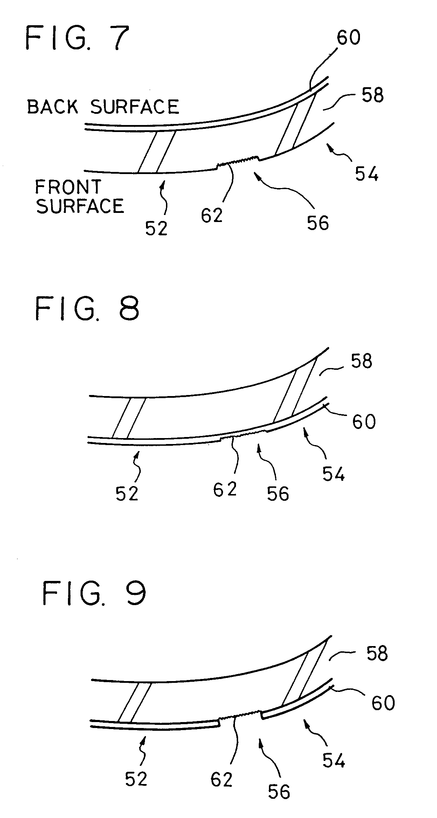

Further examples of the structure of the dividing line 56 are shown in Figs. 7 to 11. In these examples, projections and depressions 62 can be formed by blasting or other methods. Fig. 7 shows an example in which projections and depressions 62 are formed on the front surface of a glass substrate 58. Fig. 8 shows a back mirror in which a reflecting film 60 is formed on the front surface of a glass substrate 58 and projections and depressions 62 are formed on the surface of the reflecting film 60. Fig. 9 shows a rear view mirror of the same type as the one shown in Fig. 8. In this example, a reflecting film 60 is cut off and projections and depressions 62 are formed on the exposed surface of the glass substrate 58.

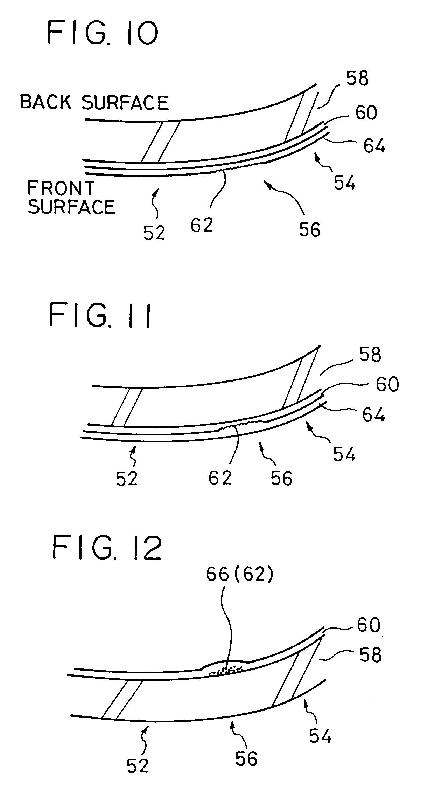

Fig. 10 shows a rear view mirror in which a reflecting film 60 is formed on the front surface of a substrate 58 made of, e.g., glass and a transparent thin film 64 made of SiO₂, TiO₂ or Al₂O₃ is formed by vapor deposition or other method on the surface of the reflecting film 60 for protecting the reflecting film 60. Fig. 11 shows a rear view mirror of the same type as the one shown in Fig. 10. In this example, projections and depressions 62 are formed on a border plane between a transparent thin film 64 and a reflecting film 60. This structure can be made by forming the projections and depressions 62 on the reflecting film 60 (or forming the projections and depressions 62 on the surface of the substrate 58 and forming the reflecting film 60 thereon to express the projections and depressions of the substrate 58 on the surface of the reflecting film 60) and then forming the transparent thin film 64 by sputtering or vapor deposition.

In the above described embodiments, the projections and depressions 62 are formed by blasting. The projections and depressions 62 may also be formed by other methods such, for example, as projection of laser beam and stamping using a die having projections and depressions. The invention is not limited to a case where projections and depressions are formed on the glass substrate 58 or reflecting film 60 itself but, as shown in Fig. 12, projections and depressions 62 may be formed by attaching fine glass beads 66 on the rear surface of a glass substrate 58. In this case, a reflecting film 60 is formed by vapor deposition after attaching the glass beads 66.

In the above described embodiments, the dividing line 56 is formed in the form of a solid line (i.e., a continuous line). Alternatively, the dividing line 56 may be formed with a dotted line or other type of line. It is only essential that the dividing line should distinguish the border between adjacent mirror surface areas. In the above described embodiments, adjacent mirror surface areas have different curvatures. The invention is applicable also to a case where a mirror surface is divided into adjacent areas which have the same curvature but constitute discontinuous planes (i.e., constituting an angle between the adjacnet areas). The number of mirror surface areas is not limited to two but it may be three or more. The invention is applicable not only to an outer mirror but also to an inner mirror.

## Claims

1. A rear view mirror (50) having plural mirror surface areas of different curvatures disposed side by side or plural mirror surface areas (52,54) disposed side by side to form discontinuous planes, said mirror comprising a dividing line (56) formed along a border portion of the plural mirror surface areas (52,54), characterized in that,
the dividing line (56) is formed with projections and depressions (62) having a light diffusion effect.

2. A rear view mirror as defined in claim 1 wherein the projections and depressions (62) are formed on at least one of a transparent substrate (58), a reflecting film (60) and a transparent thin film (64) formed on the reflecting film (60).

3. A rear view mirror as defined in claim 1 or 2 wherein the projections and depressions (62) are formed on at least one of a front surface of a transparent substrate (58), a back surface of the transparent substrate (58), a border plane between the transparent substrate (58) and a reflecting film (60), a front surface of the reflecting film (60), a front surface of a transparent thin film (64) formed on the reflecting film (60) and a border plane between the transparent thin film (64) and the reflecting film (60).

4. A rear view mirror as defined in any of claims 1-3 wherein the width of the dividing line (56) is within a range between 0.5 mm and 2 mm.

5. A method for manufacturing a rear view mirror as defined in any of claims 1-4 comprising a step of forming the projections and depressions (62) by blasting.

## Patentansprüche

1. Rückspiegel (50) mit mehreren nebeneinander angeordneten Spiegelflächenbereichen unterschiedlicher Krümmung oder mehreren zur Bildung diskontinuierlicher Ebenen nebeneinander angeordneten Spiegelflächenbereichen (52, 54), wobei der Spiegel eine entlang einem Grenzbereich der mehreren Spiegelflächenbereichen (52, 54) ausgebildete Trennlinie (56) aufweist, dadurch gekennzeichnet, daß die Trennlinie (56) mit Vorsprüngen und Vertiefungen (62) mit einem Lichtdiffisionseffekt ausgebildet ist.

2. Rückspiegel nach Anspruch 1, wobei die Vorsprünge und Vertiefungen (62) an wenigstens einem Element aus einer Gruppe ausgebildet sind, die ein transparentes Substrat (58), einen reflektierenden Film (60) und einen auf dem reflektierenden Film (60) ausgebildeten transparenten dünnen Film (64) aufweist.

3. Rückspiegel nach Anspruch 1 oder 2, wobei die Vorsprünge und Vertiefungen (62) an wenigstens einem Element aus einer Gruppe ausgebildet sind, die eine vordere Fläche eines transparenten Substrats (58), eine hintere Fläche eines transparenten Substrats (58), eine Grenzebene zwischen dem transparenten Substrat (58) und einem reflektierenden Film (60), eine vordere Fläche des reflektierenden Films (60), eine vordere Fläche eines an dem reflektierenden Film (60) ausgebildeten transparenten dünnen Films (64) und eine Grenzebene zwischen dem transparenten dünnen Film (64) und dem reflektierenden Film (60) aufweist.

4. Rückspiegel nach einem der Ansprüche 1-3, wobei die Breite der Trennlinie (56) in einem Bereich zwischen 0,5 mm und 2 mm liegt.

5. Verfahren zur Herstellung eines Rückspiegels nach einem der Ansprüche 1-4, mit einem Schritt zur Bildung der Vorsprünge und Vertiefungen (62) durch Aufdüsen.

## Revendications

1. Rétroviseur (50) ayant de multiples zones de surface de miroir de courbures différentes disposées côte à côte, ou de multiples zones de surface de miroir (52, 54) disposées côte à côte pour former des plans discontinus, ledit rétroviseur comprenant une ligne séparatrice (56) formée le long d'une partie de bordure des multiples zones (52, 54) de surface de miroir, caractérisé en ce que la ligne séparatrice (56) est formée avec des saillies et des creux (62) ayant un effet de diffusion de la lumière.

2. Rétroviseur tel que défini dans la revendication 1, dans lequel les saillies et les creux (62) sont formés sur au moins l'un des éléments constitués par un substrat transparent (58), un film réfléchissant (60) et un film mince transparent (64) formé sur le film réfléchissant (60).

3. Rétroviseur tel que défini dans la revendication 1 ou 2 dans lequel les saillies et les creux (62) sont formés sur au moins l'un des éléments constitués par une surface frontale d'un substrat transparent (58), une surface arrière du substrat transparent (58), un plan limite entre le substrat transparent (58) et un film réfléchissant (60), une surface frontale du film réfléchissant (60), une surface frontale d'un film mince transparent (64) formé sur le film réfléchissant (60), et un plan limite entre le film mince transparent (64) et le film réfléchissant (60).

4. Rétroviseur tel que défini dans l'une des revendications 1-3 dans lequel la largeur de la ligne séparatrice (56) est située à l'intérieur d'une plage entre 0.5 mm et 2 mm.

5. Procédé de fabrication d'un rétroviseur tel que défini dans l'une des revendications 1-4 comprenant une étape consistant à former les saillies et les creux (62) par projection d'abrasif.
